# EUROPÄISCHE PATENTSCHRIFT

(11) **EP 0 726 025 B1**
(45) Veröffentlichungstag und Bekanntmachung des Hinweises auf die Patenterteilung: **11.08.1999**
(21) Anmeldenummer: 95119939.7
(22) Anmeldetag: 18.12.1995
(51) Int. Cl.: A01D 41/14

(54) **Selbstfahrender Mähdrescher mit zweigeteiltem Schneidtisch**
Selfpropelled combine with two-part reader
Moissonneuse-batteuse automotrice à tablier de coupe en deux parties

(30) Priorität: 09.02.1995 DE 19504244
(43) Veröffentlichungstag der Anmeldung: 14.08.1996
(73) Patentinhaber: CLAAS KGaA, 33428 Harsewinkel (DE)
(72) Erfinder: Bürmann, Dominik, D-33428 Harsewinkel (DE)

(56) Entgegenhaltungen:
- EP-A- 0 250 649
- DE-A- 2 550 331
- DE-A- 3 407 812
- DE-B- 1 237 374
- DE-C- 976 954

## Beschreibung

Die vorliegende Erfindung betrifft einen selbstfahrenden Mähdrescher mit einem zweigeteilten Schneidtisch, dessen einer Teil im wesentlichen aus zwei Seitenwänden, einem Bodenblech und einer hinteren mit einer Durchgangsöffnung versehenen Rückwand besteht und dessen zweiter Teil wannenförmig aus zwei Seitenwänden und einem Bodenblech ausgebildet ist, wobei der zweite Teil gegenüber dem ersten Teil über parallel und mit Abstand zueinander unterhalb der Bodenbleche angeordneten hydraulischen Kolbenzylindereinheiten stufenlos verstellbar ist, zwecks Veränderung des Abstandes zwischen der Einzugswalze und dem Messerbalken.

Die Verstellbarkeit derartiger, z.B. aus DE-A-34 07812 bekannter Schneidtische hat sich beim Schneiden unterschiedlich hoher Halme und insbesondere beim Bergen von Lagergetreide als zweckmäßig erwiesen, weil sie es zuläßt, die Mäheinrichtung den jeweiligen Halmlängen anzupassen und damit zu verhindern, daß insbesondere durch die Einzugswalze Ähren erfaßt werden, bevor die zugeordneten Halme geschnitten sind. Der Verstellbereich ist allerdings begrenzt durch die Länge der beiden Schneidtischhälften da sich diese einerseits bei maximalem Verstellweg noch überlappen müssen und andererseits so weit ineinander verschiebbar sein müssen, daß auch noch sehr kurzes Halmgut einwandfrei geschnitten und eingezogen werden kann. Aufgrund dieser unabdingbaren Forderungen war es bisher nicht möglich, zwei geteilte Schneidtische so auszugestalten, daß auch überlanges Halmgut, beispielsweise Raps, geerntet werden konnte. Speziell zum Ernten von Raps sind bisher separate Schneidtische bzw. Vorsatzgeräte eingesetzt worden, die, weil sie nur einem einzigen Zweck dienten, nämlich der Ernte von Raps, teuer und unwirtschaftlich waren. Der vorliegenden Erfindung liegt daher die Aufgabe zugrunde, einen selbstfahrenden Mähdrescher mit einem zweigeteilten Schneidtisch so auszubilden, daß dieser auf einfache Art und Weise auch für die Ernte von Raps eingesetzt werden kann.

Diese Aufgabe wird bei einem selbstfahrenden Mähdrescher der eingangs näher bezeichneten Art dadurch gelöst, daß der maximale Verstellweg der beiden Schneidtischteile zueinander, bei dem die beiden Bodenbleche sowie die zugeordneten Seitenwände einander noch überlappen, durch mindestens ein in Wirkstellung bringbares mechanisches Riegelelement begrenzt und der maximale Hub der Kolbenzylindereinheiten größer ist als der durch das Riegelelement begrenzte Verstellweg der beiden Schneidtischteile zueinander und daß bei Außerwirkstellung des Riegelelementes und voll ausgefahrenen Kolbenstangen der Kolbenzylindereinheiten zwischen dem feststehenden und dem beweglichen Teil des Schneidtisches ein Abstand vorhanden ist, der durch einen Zwischenboden und zwei einbaubare Zwischenwandteile überbrückt ist.

Auf vorteilhafte Weise sind dabei unterhalb des Bodenbleches des feststehenden ersten Teiles des Schneidtisches mehrere parallele im Abstand zueinander verlaufende Profileisen mit dem Bodenblech fest verbunden, in denen die Zylinder der Kolbenzylindereinheiten fest gelagert sind wobei die Kolbenstangen der Kolbenzylindereinheiten an Profilen befestigt sind, die von den die Zylinder aufnehmenden Profileisen gehalten sind und mit diesen teleskopartig verschiebbar zusammenwirken, wobei die beweglichen Profile den vorderen Teil des Schneidtisches, bestehend aus Seitenwänden und Bodenblech, sowie den Mähbalken, tragen.

Weitere vorteilhafte Ausführungsformen der Erfindung sind in den Unteransprüchen näher definiert.

Im folgenden soll die Erfindung anhand eines Ausführungsbeispieles und mehrerer dieses schematisch darstellender Figuren näher erläutert werden. Dabei zeigt:
- Figur 1: den vorderen Teil eines selbstfahrenden Mähdreschers mit zweigeteiltem Schneidtisch in zusammengefahrener Stellung,
- Figur 2: den in Figur 1 dargestellten zweigeteilten Schneidtisch in begrenzt ausgefahrener Stellung,
- Figur 3: den in Figur 1 dargestellten zweigeteilten Schneidtisch in völlig ausgefahrener Stellung,
- Figur 4: die Lagerung und Stellung eines Verschiebeelementes entsprechend der Stellung des Schneidtisches nach Figur 2,
- Figur 5: den unteren Verstellteil des Schneidtisches gemäß Figur 3 in vergrößerter Darstellung,
- Figur 6: eine Darstellung gemäß der Schnittlinie VI-VI aus Figur 5,
- Figur 7: eine Darstellung gemäß der Schnittlinie VII-VII aus Figur 5,
- Figur 8: eine Darstellung gemäß des Schnittlinie VIII-VIII aus Figur 5 und
- Figur 9: die Lage der hydraulischen Kolbenzylindereinheiten mit Bezug auf den Schneidtisch sowie eine Schaltung zum Gleichlauf aller Zylinder.

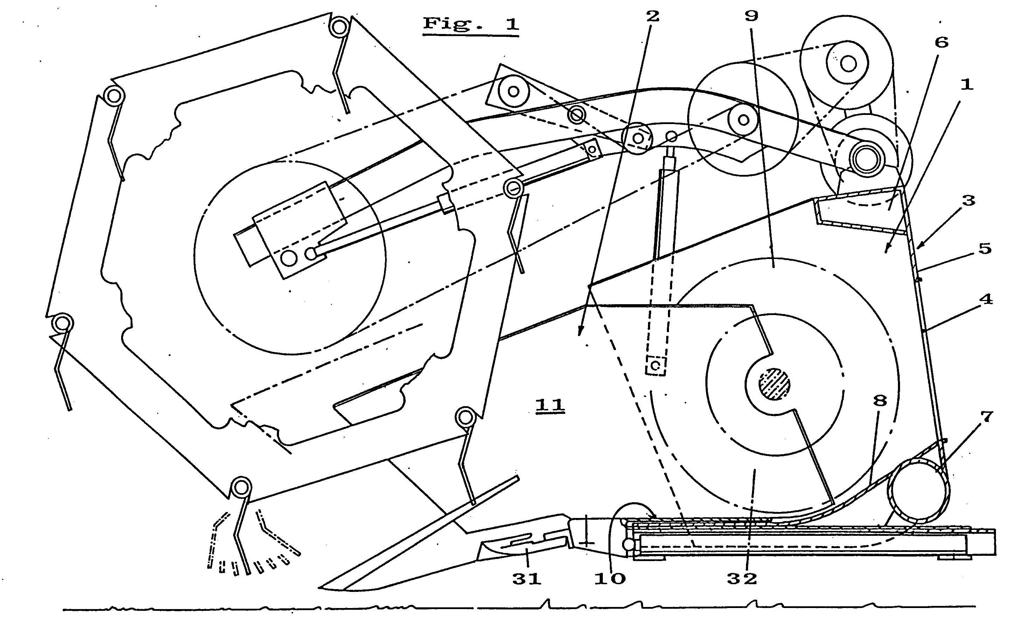

In der Figur 1 ist ein Schneidtisch dargestellt, der aus einem feststehenden Schneidtischteil 1 und einem beweglichen Schneidtischteil 2 besteht. Der feststehende Schneidtischteil 1 weist einen hinteren Rahmen 3 auf, der eine mit einer Durchgangsöffnung 4 versehene Rückwand 5, ein oberes Verstärkungsprofil 6, ein unteres Tragrohr 7, ein Bodenblech 8 und Seitenwände 9 umfaßt. Der bewegliche Schneidtischteil 2 besteht im wesentlichen aus einem Bodenblech 10 und Seitenwänden 11. Wie aus der Figur 1 hervorgeht, sind die beiden Schneidtischteile 1 und 2 teleskopartig ineinander geschoben, so daß sich insgesamt ein sehr kurzer Schneidtisch ergibt.

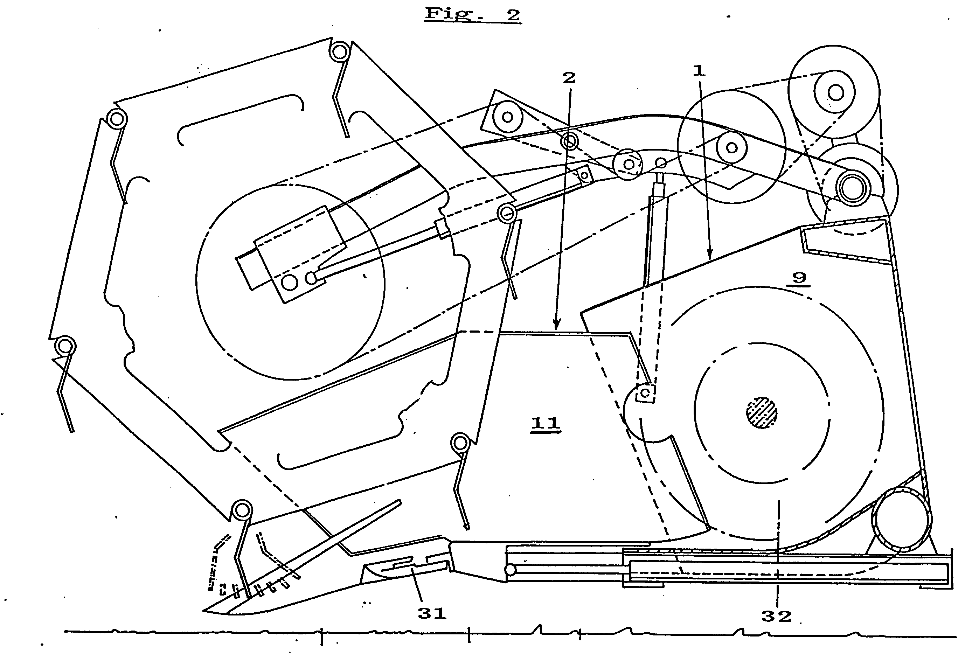

Die Figur 2 zeigt die Lage, in der der bewegliche Schneidtischteil 2 so weit ausgeschoben ist, daß gerade noch eine überlappende Verbindung zum feststehenden Schneidtischteil 1 besteht.

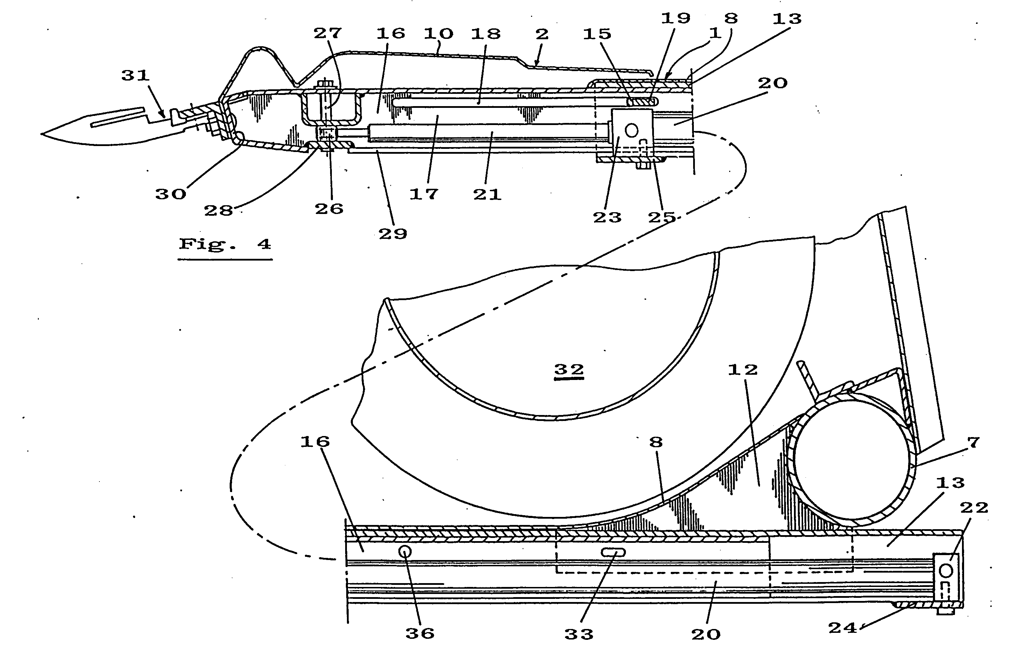

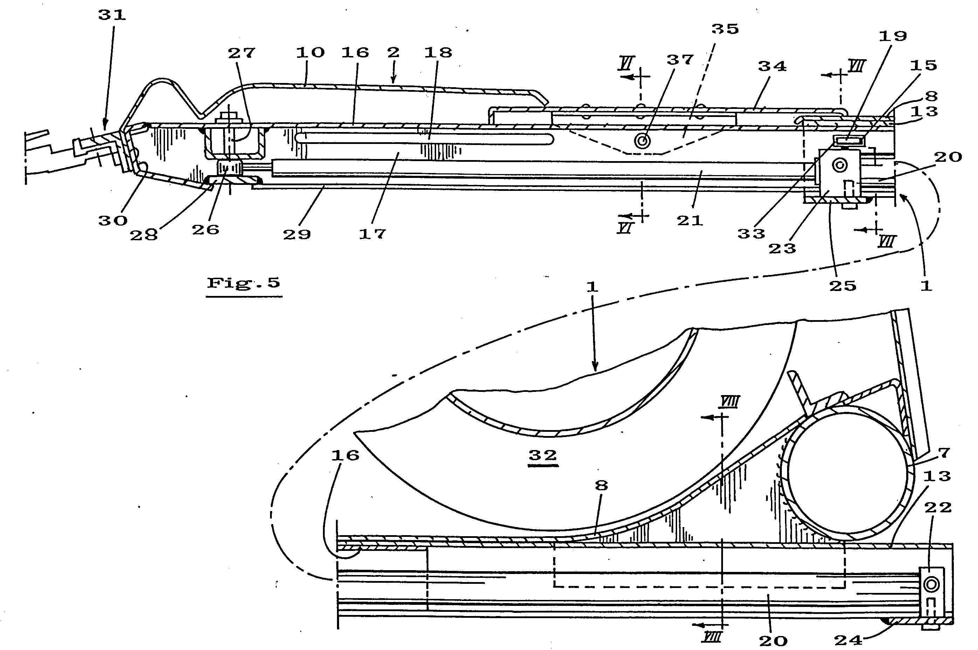

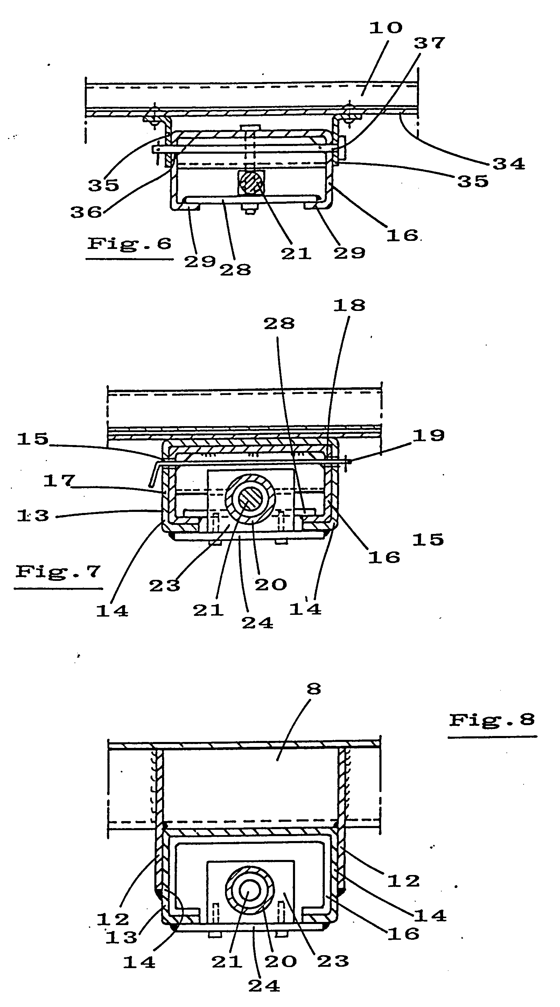

Wie die Figur 4 zeigt, sind mit dem Tragrohr 7 und dem Bodenblech 8 nach unten freiauslaufende Bleche 12 verschweißt, wobei mit jeweils zwei Blechen 12 ein nach unten offenes U-Profil 13 fest verbunden ist. Die nach unten frei auslaufenden Stege eines jeden U-Profils sind um einen geringen Betrag um 90° nach innen abgebogen und bilden Auflageflächen. Die beiden seitlichen Schenkel eines jeden U-Profiles weisen in ihrem vorderen Bereich einen Durchbruch 15 auf. In jedes U-Profil 13 ist ein U-Profil 16 eingeschoben in dessen Schenkel 17 Längsschlitze 18 vorgesehen sind. In der in Figur 4 dargestellten Lage kann das innere U-Profil 16 nicht weiter aus dem äußeren U-Profil 13 herausgeschoben werden, weil nämlich die Lage des U-Profils 16 hinsichtlich der weiteren Ausschubbewegung durch einen Riegel 19 gesichert ist, welcher die Durchbrechungen 15 im äußeren U-Profil sowie den Längsschlitz 18 im inneren U-Profil 16 durchdringt. Es ist lediglich möglich, entsprechend der Länge des Längsschlitzes 18 das innere Profil 16 weiter in das äußere Profil 13 hineinzuschieben. Dies geschieht über aus je einem Zylinder 20 und einer Kolbenstange 21 gebildeten Kolbenzylindereinheiten 39-42. Jeder Zylinder 20 ist dabei über Konsolen 22 und 23 mit Platten 24 und 25 verbunden, welche mit den nach innen ragenden Schenkelteilen der Schenkel 14 in den beiden Endbereichen des U-Profiles 13 verschweißt sind. Die Kolbenstange 21 einer jeden Kolbenzylindereinheit weist einen vorderen Befestigungskopf 26 auf, der von einem Bolzen 27 durchdrungen ist. Der Bolzen 27 ist befestigt zum einen mit dem zugehörigen inneren U-Profil 16 und mit einem Brückenblech 28, welches mit den nach innen ragenden Schenkeln 29 des U-Rahmens 16 verschweißt ist. Der vordere Teil eines U-Profiles 16 weist eine Stirnwand 30 auf, mit der sowohl der Messerbalken 31 wie auch das Bodenblech 10 verschraubt sind. Man erkennt aus der Figur 4, daß das Bodenblech 10 das Bodenblech 8 in der hier dargestellten Stellung noch um ein geringes Maß überlappt. In dieser Stellung der beiden Schneidtischteile 1 und 2 zueinander kann relativ langhalmiges Erntegut verarbeitet werden. Zum Ernten von Raps reicht allerdings die in Figur 2 dargestellte Lage nicht aus, d. h., der Abstand des Messerbalkens 31 von der Einzugswalze 32 ist noch zu gering. Um diesen Abstand zu vergrößern wird der Riegel 19, wie er in Figur 4 dargestellt ist, zunächst einmal entfernt. Durch Beaufschlagung aller Zylinder 20 mit Drucköl werden die Kolbenstangen 21 dann soweit ausgefahren, bis die Durchbrechungen 33 in den seitlichen Schenkeln des inneren U-Profils 16 (Figur 4) mit den Durchbrüchen 15 in den Schenkeln des äußeren U-Profils 13 fluchten (Fig.5). Sodann wird der Riegel 19 wieder eingeschoben, wodurch die Stellung der Profile 13 und 16 zueinander festgelegt ist. Während dieser Verfahrbewegung haben sich die Schneidtischteile 1 und 2 soweit voneinander entfernt, daß zwischen ihnen eine Lücke entsteht. Um diese Lücke auszufüllen, ist ein Zwischenboden 34 (Figuren 5 und 6) vorgesehen, der einerseits das Bodenblech 8 des feststehenden Schneidtischteiles 1 überlappt und andererseits vom Bodenblech 10 des beweglichen Schneidtischteiles 2 überlappt wird. Zwecks Fixierung des Teiles 34 sind mit diesem nach unten ragende Winkel 35 vernietet, von denen jeweils zwei ein inneres U-Profil 16 seitlich einfassen. In den seitlichen Schenkeln des U-Profiles 16 sind Durchgangsbohrungen 36 vorgesehen, die mit Bohrungen in Tragwinkeln 35 fluchten. Durch den Bolzen 37 wird dann der Zwischenboden 34 mit dem U-Profil 16 verriegelt, so daß durch die Teile 10, 34 und 8 ein insgesamt durchgehender Boden gebildet wird.

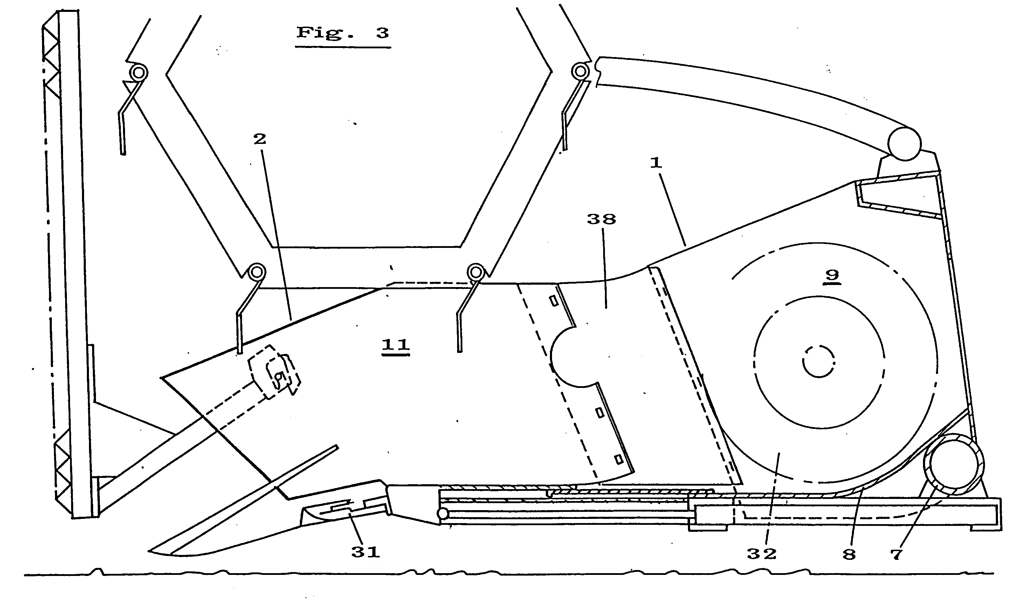

Die Figur 3 zeigt, daß der Abstand der Seitenwände 9 und 11 voneinander durch ein Zwischenwandteil 38 überbrückt wird.

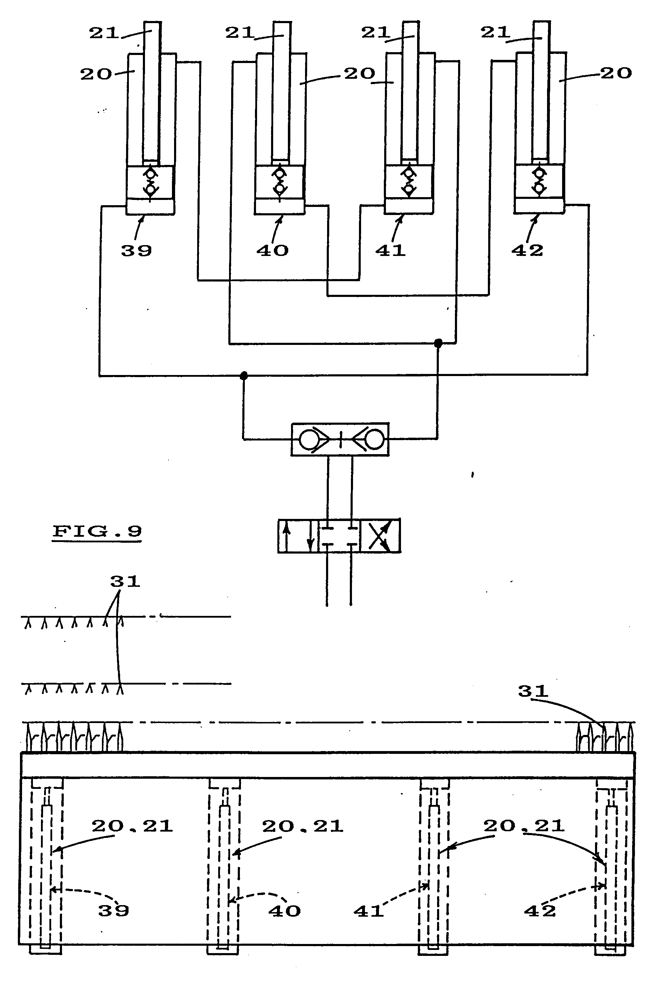

Die Figur 9 zeigt schematisch die Lage der Kolbenzylindereinheiten 39 - 42 zum Schneidwerk 1, 2 sowie eine Schaltung zum Gleichlauf der Kolbenstangen 21. Hierbei ist deutlich zu erkennen, daß die Kolbenzylindereinheiten in zwei Gleichlaufzylindergruppen aufgeteilt sind. Die erste Gruppe besteht aus den Kolbenzylindereinheiten 39 und 41, während die zweite Gruppe aus den Kolbenzylindereinheiten 40 und 42 besteht. Hierdurch wird erreicht, daß unabhängig von der Anzahl der verwendeten Kolbenzylindereinheiten nur zwei unterschiedlich große Kolbenzylindereinheiten eingesetzt zu werden brauchen. Es war bisher üblich, die verwendeten Kolbenzylindereinheiten zu einer einzigen Gruppe von Gleichlaufzylindern zusammenzufassen. Dies bedeutet, daß alle Kolben kaskadenartig im Durchmesser zueinander abgestuft sein mußten, so daß demzufolge auch alle eingesetzten Kolbenzylindereinheiten in ihrer Größe voneinander abwichen.

### Bezugszeichenübersicht

- 1: - Schneidtischteil
- 2: - Schneidtischteil
- 3: - Rahmen
- 4: - Durchgangsöffnung
- 5: - Rückwand
- 6: - Verstärkungsprofil
- 7: - Tragrohr
- 8: - Bodenblech
- 9: - Seitenwände
- 10: - Bodenblech
- 11: - Seitenbleche
- 12: - Bleche
- 13: - U-Profil
- 14: - Schenkel
- 15: - Durchbruch
- 16: - U-Profil
- 17: - Schenkel
- 18: - Längsschlitze
- 19: - Riegel
- 20: - Zylinder
- 21: - Kolbenstange
- 22: - Konsolen
- 23: - Konsolen
- 24: - Platten
- 25: - Platten
- 26: - Befestigungskopf
- 27: - Bolzen
- 28: - Brückenblech
- 29: - Schenkel
- 30: - Stirnwand
- 31: - Messerbalken
- 32: - Einzugswalze
- 33: - Durchbrechung
- 34: - Zwischenboden
- 35: - Winkel
- 36: - Bohrung
- 37: - Bolzen
- 38: - Zwischenwandteil
- 39-42: - Kolbenzylindereinheiten

## Patentansprüche

1. Selbstfahrender Mähdrescher mit einem zweigeteilten Schneidtisch, dessen einer Teil (1) im wesentlichen aus zwei Seitenwänden (9), einem Bodenblech (8) und einer hinteren, mit einer Durchgangsöffnung (4) versehenen Rückwand (5) besteht und dessen zweiter Teil (2) wannenförmig aus zwei Seitenwänden (11) und einem Bodenblech (10) gebildet ist, wobei der zweite Teil (2) gegenüber dem ersten Teil (1) über parallel mit Abstand zueinander unterhalb der Bodenbleche (8, 10) angeordnete hydraulische Kolbenzylindereinheit (39-42) stufenlos verstellbar ist zwecks Verkürzung bzw. Verlängerung des Abstandes des Messerbalkens (31) zur Einzugswalze (32) des Schneidtisches,
**dadurch gekennzeichnet**,
daß der maximale Verstellweg der beiden Schneidtischteile 1 und 2 zueinander, bei dem die beiden Bodenbleche (8, 10) sowie die zugeordneten Seitenwände (9, 11) einander noch überlappen, durch mindestens ein in Wirkstellung bringbares Riegelelement (19) begrenzt und der maximale Hub der Kolbenzylindereinheiten (39-42) größer ist als der durch das Riegelelement (19) begrenzte Verstellweg der beiden Schneidtischteile (1, 2) zueinander, und daß bei Außerwirkstellung des Riegelelementes (19) und vollkommen ausgefahrenen Kolbenstangen (21) der Kolbenzylindereinheiten zwischen dem feststehenden und dem beweglichen Teil des Schneidtisches (1, 2) ein Abstand vorhanden der durch einen Zwischenboden (34) und durch zwei Zwischenwandteile (38) überbrückt ist.

2. Selbstfahrender Mähdrescher nach Anspruch 1,
**dadurch gekennzeichnet**,
daß unterhalb des Bodenbleches (8) des feststehenden ersten Teiles des Schneidtisches mehrere parallel mit Abstand zueinander verlaufende Profile (13) mit dem Bodenblech (8) fest verbunden sind, in denen die Zylinder (20) der Kolbenzylindereinheiten fest gelagert sind und daß die Kolbenstangen (21) der Kolbenzylindereinheiten an Profilen (16) befestigt sind, die von den die Zylinder aufnehmenden Profilen gehalten sind und mit diesen teleskopartig verschiebbar zusammenwirken, wobei die beweglichen Profile (16) den beweglichen Schneidtischteil (2) tragen, der im wesentlichen aus Seitenwänden (11), Bodenblech (10) und Messerbalken (31) besteht.

3. Selbstfahrender Mähdrescher nach den Ansprüchen 1 und 2,
**dadurch gekennzeichnet**,
daß der Zwischenboden (34) mit zumindest einem verschiebbaren Profil (16) verbunden ist.

4. Selbstfahrender Mähdrescher nach Anspruch 3,
**dadurch gekennzeichnet**,
daß der Zwischenboden (34) zwei nach unten weisende Tragwinkel (35) aufweist, die mit Seitenbegrenzungen eine Profiles (16) verbunden sind.

5. Selbstfahrender Mähdrescher nach den Ansprüchen 1 bis 4,
**dadurch gekennzeichnet**,
daß jedes dem feststehenden Schneidtischteil (1) zugeordnete Profil (13) ein nach unten offenes U-Profil ist, dessen frei auslaufende Schenkel (14) nach innen um 90° abgewinkelt sind indem jeweils ein dem verschiebbaren Schneidtischteil (2) zugeordnetes Profil (16) teleskopartig bewegbar geführt ist, wobei letzteres Profil (16) ebenfalls ein nach unten offenes U-Profil bildet mit nach innen abgewinkelten Schenkeln.

6. Selbstfahrender Mähdrescher nach den Ansprüchen 1 bis 5,
**dadurch gekennzeichnet**,
daß die frei auslaufenden Schenkel eines jeden dem feststehenden Schneidtischteil (1) zugeordneten U-Profiles (13) in den beiden Endbereichen über Platten (24, 25) miteinander fest verbunden sind, an denen der Zylinder (20) einer jeden Kolbenzylindereinheit abstützt.

7. Selbstfahrender Mähdrescher nach den Ansprüchen 1 bis 6,
**dadurch gekennzeichnet**,
daß die vorderen Stirnseiten der verschiebbaren U-Profile (16) durch Wände (30) geschlossen und mit den Stirnwänden der Messerbalken sowie das Bodenblech (10) verbunden sind.

8. Selbstfahrender Mähdrescher nach den Ansprüchen 1 bis 7,
**dadurch gekennzeichnet**,
daß die Kolbenzylindereinheiten (39 - 42) als Gleichlaufzylinder ausgebildet sind.

9. Selbstfahrender Mähdrescher nach den Ansprüchen 1 bis 8,
**dadurch gekennzeichnet**,
daß das Riegelelement (19) im äußeren U-Profil (13) festgelegt ist und quer einen Längesschlitz (18) durchgreift, der in den beiden seitlichen Schenkeln eines inneren U-Profiles (16) eingebracht ist, derart, daß durch die Länge der Längsschlitze der stufenlose Verstellbereich des beweglichen Schneidtischteiles (2) zum feststehenden Schneidtischteil (1) festgelegt ist, wobei innerhalb dieses Bereiches die beiden Bodenbleche (8, 10) und die Seitenwände (9, 11) der Schneidtischteile (1, 2) einander überlappen.

10. Selbstfahrender Mähdrescher nach den Ansprüchen 1 bis 8,
**dadurch gekennzeichnet**,
daß das innere U-Profil (16) mit dem zugehörigen äußeren U-Profil (13) in seiner am weitesten auseinandergezogenen Stellung mechanisch verriegelt ist.

11. Selbstfahrender Mähdrescher nach Anspruch 8,
**dadurch gekennzeichnet**,
daß jeweils zwei Kolbenzylindereinheiten (39, 41 bzw. 40, 42) als Gleichlaufzylinder ausgebildet sind.

12. Selbstfahrender Mähdrescher nach den Ansprüchen 8 und 11,
**dadurch gekennzeichnet**,
daß jeweils zwei einander nicht unmittelbar benachbarte Kolbenzylindereinheiten (39, 41 bzw. 40, 42) als Gleichlaufzylinder ausgebildet sind.

## Claims

1. A self-propelled combine harvester having a cutting table which is divided into two parts of which one part (1) substantially comprises two side walls (9), a bottom plate (8) and a rear wall (5) provided with a through opening (4) and the second part (2) is formed in a trough configuration from two side walls (11) and a bottom plate (10), wherein the second part (2) is steplessly displaceable with respect to the first part (1) by way of hydraulic piston-cylinder units (39-42) arranged parallel at a spacing relative to each other beneath the bottom plates (8, 10), for the purposes of reducing or increasing the spacing of the cutter bar (31) relative to the intake drum (32) of the cutting table, characterised in that the maximum displacement travel of the two cutting table parts (1 and 2) relative to each other, at which the two bottom plates (8, 10) and the associated side walls (9, 11) still overlap each other, is limited by at least one locking element (19) which can be brought into an operative position and the maximum stroke of the piston-cylinder units (39-42) is greater than the displacement travel, limited by the locking element (19), of the two cutting table parts (1, 2) relative to each other, and that when the locking element (19) is in the inoperative position and the piston rods (21) of the piston-cylinder units are fully extended, there is between the fixed and the movable part of the cutting table (1, 2) a spacing which is bridged over by an intermediate bottom (34) and by two intermediate wall portions (38).

2. A self-propelled combine harvester according to claim 1 characterised in that beneath the bottom plate (8) of the fixed first part of the cutting table a plurality of profile members (13) which extend parallel at a spacing relative to each other are fixedly connected to the bottom plate (8), in which members the cylinders (20) of the piston-cylinder units are fixedly mounted, and that the piston rods (21) of the piston-cylinder units are secured to profile members (16) which are held by the profile members accommodating the cylinders and telescopically displaceably co-operate therewith, and wherein the movable profile members (16) carry the movable cutting table part (2) which substantially comprises side walls (11), bottom plate (10) and cutter bar (31).

3. A self-propelled combine harvester according to claims 1 and 2 characterised in that the intermediate bottom (34) is connected to at least one displaceable profile member (16).

4. A self-propelled combine harvester according to claim 3 characterised in that the intermediate bottom (34) has two downwardly facing support angle members (35) which are connected to side boundary portions of a profile member (16).

5. A self-propelled combine harvester according to claims 1 to 4 characterised in that each profile member (13) associated with the fixed cutting table part (1) is a downwardly open U-shaped profile member whose freely terminating limbs (14) are angled inwardly through 90°, in which a respective profile member (16) associated with the displaceable cutting table part (2) is telescopically movably guided, wherein the latter profile member (16) also forms a downwardly open U-shaped profile member with inwardly angled limbs.

6. A self-propelled combine harvester according to claims 1 to 5 characterised in that the freely terminating limbs of each U-shaped profile member (13) associated with the fixed cutting table part (1) are fixedly connected together in the two end regions by way of plates (24, 25) on which the cylinder (20) of a respective piston-cylinder unit is supported.

7. A self-propelled combine harvester according to claims 1 to 6 characterised in that the front ends of the displaceable U-shaped profile members (16) are closed by walls and the cutter bar and the bottom plate (10) are connected to the end walls.

8. A self-propelled combine harvester according to claims 1 to 7 characterised in that the piston-cylinder units (39-42) are in the form of synchronous cylinders.

9. A self-propelled combine harvester according to claims 1 to 8 characterised in that the locking element (19) is secured in the outer U-shaped profile member (13) and passes transversely through an elongate slot (18) provided in the two lateral limbs of an inner U-shaped profile member (16), in such a way that the length of the elongate slots establishes the stepless adjustment range of the movable cutting table part (2) relative to the fixed cutting table part (1), wherein within that range the two bottom plates (8, 10) and the side walls (9, 11) of the cutting table parts (1, 2) overlap each other.

10. A self-propelled combine harvester according to claims 1 to 8 characterised in that the inner U-shaped profile member (16) is mechanically locked to the associated outer U-shaped profile member (13) in its furthest extended position.

11. A self-propelled combine harvester according to claim 8 characterised in that each two piston-cylinder units (39, 41 and 40, 42 respectively) are in the form of synchronous cylinders.

12. A self-propelled combine harvester according to claims 8 and 11 characterised in that each two piston-cylinder units (39, 41 and 40, 42 respectively) which are not immediately adjacent to each other are in the form of synchronous cylinders.

## Revendications

1. Moissonneuse-batteuse automotrice comprenant une table de coupe en deux parties, dont une partie (1) est essentiellement composée de deux parois latérales (9), d'une tôle de fond (8) et d'une paroi arrière (5) pourvue d'une ouverture de passage (4) et dont la seconde partie (2) en forme d'auge est formée de deux parois latérales (11) et d'une tôle de fond (10), la seconde partie (2) pouvant être déplacée de manière continue par rapport à la première partie (1) à l'aide d'ensembles piston-cylindre (39, 42) hydrauliques qui sont disposés parallèlement les uns aux autres, à distance les uns des autres, sous les tôles de fond (8, 10), aux fins d'augmenter ou de diminuer la distance entre la barre de coupe (31) et le tambour d'alimentation (32) de la table de coupe
caractérisée par le fait que
la course de réglage maximale des deux parties de table de coupe (1) et (2), pour laquelle les deux tôles de fond (8, 10) ainsi que les parois latérales (9, 11) associées sont encore en recouvrement mutuel, est limitée par au moins un élément de verrouillage (19) pouvant être amené en position active et que la course maximale des ensembles piston-cylindre (39-42) est supérieure à la course de réglage des deux parties de table de coupe (1) et (2) limitée par l'élément de verrouillage (19) et par le fait que, lorsque l'élément de verrouillage (19) se trouve en position non active et que les tiges de piston (21) des ensembles piston-cylindres sont entièrement sorties, il existe entre la partie mobile et la partie fixe de table de coupe (1, 2) un espace qui est ponté par un fond intermédiaire (34) et par deux parties intermédiaires (38) de parois latérales.

2. Moissonneuse-batteuse automotrice selon la revendication 1, caractérisée par le fait qu'au-dessous de la tôle de fond (8) de la première partie de table de coupe fixe, plusieurs profilés (13) qui sont disposés parallèlement les uns aux autres, à distance les uns des autres, et dans lesquels les ensembles piston-cylindre sont montés fixes, sont liés rigidement à la tôle de fond (8) et par le fait que les tiges de piston (21) des ensembles piston-cylindre sont fixées à des profilés (16) qui sont supportés par les profilés recevant les cylindres et qui coopèrent avec ceux-ci en coulissant de manière téléscopique, les profilés mobiles (16) portant la partie de table de coupe (2) mobile essentiellement composée des parois latérales (11), de la tôle de fond (10) et de la barre de coupe (31).

3. Moissonneuse-batteuse automotrice selon les revendications 1 et 2, caractérisée par le fait que le fond intermédiaire (34) est lié à au moins un profilé (16) coulissant.

4. Moissonneuse-batteuse automotrice selon la revendication 3, caractérisée par le fait que le fond intermédiaire (34) comporte deux équerres de support (35) dirigées vers le bas qui sont reliées à des côtés d'un profilé (16).

5. Moissonneuse-batteuse automotrice selon une des revendications 1 à 4, caractérisée par le fait que chaque profilé (13) associé à la partie de table de coupe (1) fixe est un profilé en U ouvert vers le bas, dont les extrémités libres des ailes (14) sont pliées à 90° en direction de l'intérieur, dans lequel un profilé (16) associé à la partie de table de coupe (2) mobile est guidé de manière téléscopique, ce dernier profilé (16) se présentant lui aussi sous la forme d'un profilé en U ouvert vers le bas, avec des ailes pliées en direction de l'intérieur.

6. Moissonneuse-batteuse automotrice selon une des revendications 1 à 5, caractérisée par le fait que les extrémités libres de chaque profilé en U (13) associé à la partie de table de coupe (1) fixe, dans les deux régions d'extrémité, sont reliées entre elles par des plaques (24, 25) sur lesquelles le cylindre (25) de chaque ensemble piston-cylindre prend appui.

7. Moissonneuse-batteuse automotrice selon une des revendications 1 à 6, caractérisée par le fait que les faces frontales antérieures des profilés en U (16) coulissants sont fermées par des parois (30) et que la barre de coupe et la tôle de fond (10) sont reliées aux parois frontales.

8. Moissonneuse-batteuse automotrice selon une des revendications 1 à 7, caractérisée par le fait que les ensembles piston-cylindres (39-42) sont agencés en vérin synchrones.

9. Moissonneuse-batteuse automotrice selon une des revendications 1 à 8, caractérisée par le fait que l'élément de verrouillage est solidaire du profilé en U (13) extérieur et pénètre transversalement dans une fente longitudinale (18) aménagée dans les deux ailes latérales d'un profilé en U (16) intérieur, de telle sorte que la plage de réglage continu de la partie de table de coupe (2) mobile par rapport à la partie de table de coupe (1) fixe soit déterminée par la longueur de la fente longitudinale, les deux tôles de fond (8, 10), et les parois latérales (9, 11) des parties de table de coupe (1, 2) se chevauchant réciproquement à l'intérieur de cette plage.

10. Moissonneuse-batteuse automotrice selon une des revendications 1 à 8, caractérisée par le fait que le profilé en U (16) intérieur est verrouillé mécaniquement dans le profilé en U (13) extérieur dans sa position de sortie maximale.

11. Moissonneuse-batteuse automotrice selon la revendication 8, caractérisée par le fait que deux ensembles piston-cylindre (39, 41 et 40, 42) sont agencés en vérins synchrones.

12. Moissonneuse-batteuse automotrice selon une des revendications 8 à 11, caractérisée par le fait que chaque fois deux ensembles piston-cylindre (39, 41 et 40, 42) qui ne sont pas directement voisins sont agencés en vérins synchrones.
